# EUROPÄISCHE PATENTSCHRIFT

(11) **EP 0 394 636 B1**
(45) Veröffentlichungstag und Bekanntmachung des Hinweises auf die Patenterteilung: **17.04.1996**
(21) Anmeldenummer: 90103419.9
(22) Anmeldetag: 22.02.1990
(51) Int. Cl.: C09J 123/02, C09D 123/02

(54) **Schmelzkleber und Beschichtungsmasse**
Hot melt adhesive and coating compound
Adhésif applicable à chaud et masse de revêtement

(30) Priorität: 20.04.1989 DE 3912949
(43) Veröffentlichungstag der Anmeldung: 31.10.1990
(73) Patentinhaber: HÜLS AKTIENGESELLSCHAFT, D-45764 Marl (DE)
(72) Erfinder: Kehr, Helmut, Dr., D-4235 Schermbeck (DE); Kühnle, Adolf, Dr., D-4370 Marl (DE); Schleinzer, Matthias, Dr., D-4270 Dorsten 1 (DE)

(56) Entgegenhaltungen:
- EP-A- 0 152 710
- DE-A- 1 569 031
- GB-A- 2 081 723
- GB-A- 2 205 528

## Beschreibung

Gegenstand der Erfindung ist eine Schmelzkleber- und Beschichtungsmasse, die über die Hotmelt-Technologie verarbeitbar ist und als Grundlage weitgehend amorphe Polyalphaolefine enthält.

Es ist bekannt, daß man bei Schmelzklebermassen auf Basis der erfindungsgemäß verwendeten, gezielt hergestellten Polyalphaolefine eine verbesserte Haftung auf Substraten unterschiedlicher Art durch Zumischen (Zusatzmenge 10 bis 40 Gew.-%) eines in der Regel doppelbindungsfreien bzw. doppelbindungsarmen Harzes wie z. B. eines Kohlenwasserstoff-, Terpen- oder eines hydrierten Kolophoniumharzes erreicht. Harze haben jedoch neben dem Vorteil, daß sie die Haftung verbessern, auch mehrere Nachteile. Sie erniedrigen die Viskosität, d. h. die Kohäsion, des Polyalphaolefins. Darüber hinaus fungieren die mit amorphen Polyalphaolefinen üblicherweise kombinierten Harze generell als Weichmacher und verschlechtern somit deren Wärmestandfestigkeit. Häufig führen Harze auch zu starken Beeinträchtigungen der Wärmestabilität, der Farbe und des Geruchs der schmelzflüssigen Massen. Nicht zuletzt läßt sich jedoch eine signifikante Haftungsverbesserung auf bestimmten Substraten wie Polyolefinen durch Harzzugabe überhaupt nicht erreichen.

Auch war die verbesserte Haftung funktionalisierter Polyolefine auf polaren und metallischen Oberflächen sowie ihre verbesserte Verankerung an Füllstoffen wie z. B. Calciumcarbonat grundsätzlich bekannt. Es handelt sich dabei jedoch entweder um hochmolekulare, zum Teil Nylon, Kautschuk oder Polyethylen enthaltende Formmassen, die nur über die aufwendige Extrudertechnik oder mittels aufwendiger Knetsysteme (z. B. Banbury-Kneter) herstellbar bzw. verarbeitbar sind, oder um Hotmeltformulierungen auf Basis von Polyethylen oder aber um füllstoffhaltige bzw. füllstoffreiche Massen, worin die funktionelle Gruppe ausschließlich den Zweck hat, die Verankerung der Polyolefine an einem Füllstoff zu verbessern.

Aus der DE-A-15 69 031 sind Gemische eines Propylenpolymeren mit einem anderen Propylenpolymeren bekannt, welches durch chemische Reaktion mit Maleinsäureanhydrid modifiziert worden ist. Das Gemisch wird insbesondere zum Beschichten von Metallen verwendet; es kann jedoch nicht mit Hilfe der üblichen Hotmelt-Technologie aufgebracht werden. Weiterhin sind in der EP-A-0 152 710 Verpackungsmaterialien beschrieben, bei denen eine thermoplastische Schicht zwischen zwei Aluminiumfolien eingebettet ist; die thermoplastische Schicht besteht hierbei aus amorphem Polypropylen, einem weichen kristallinen Wachs und/oder einem Ethylen-Acrylsäure-Acrylester-Terpolymeren. Auch hier ist eine Verarbeitung mittels Hotmelt-Technologie nicht möglich.

Aufgabe war es daher, eine gewünschtenfalls völlig harzfreie, leicht verarbeitbare Schmelzklebermasse zu entwickeln, bei deren Verarbeitung die Vorteile der Hotmelttechnologie wie z. B. das gegenüber der Extrudertechnologie niedrigere Anlageninvestment, die höhere Flexibilität bei der Verarbeitung einer Schmelzmasse, z. B. beim Wechsel der Schmelzkleberformulierung, sowie die Verarbeitungsvielfalt (z. B. Sprühauftrag) voll ausgenutzt werden können, die jedoch die Nachteile der harzhaltigen Formulierungen nicht besitzt. Es wurden zwar in der Vergangenheit bereits verschiedentlich Anstrengungen unternommen, die erfindungsgemäß verwendeten Polyalphaolefine mit ungesättigten Carbonsäuren bzw. deren Derivaten radikalisch zu pfropfen, um zu Produkten mit den oben genannten Vorteilen zu gelangen. Diese Versuche scheiterten unter anderem an der sehr schlechten Pfropfausbeute bzw. an der Tatsache, daß Monomer im Produkt verbleiben kann, an den durch die radikalische Pfropfung gleichzeitig initiierten Abbau- oder Vernetzungsreaktionen (z. B. bei Polyalphaolefinen, die Ethylen enthalten) sowie an der durch die Pfropfungsreaktion herbeigeführten Farbverschlechterung.

Die Aufgabe wird gelöst mit Hilfe einer leicht aufschmelz- und verarbeitbaren Schmelzkleber- und Beschichtungsmasse mit einer Schmelzviskosität (gemessen bei 190 °C) zwischen 1 000 und 60 000 mPa s bestehend aus
a) 90 bis 99,9 Gewichtsteilen eines weitgehend amorphen Polyalphaolefins mit einem Erweichungspunkt von 70 bis 140 °C, einer Dichte < 0,90 g/cm³ sowie Zugfestigkeit zwischen 0,5 und 10 N/mm,
b) 0,1 bis 10 Gewichtsteile eines funktionelle Gruppen tragenden Polymeren auf Basis von Olefinen und ungesättigten Carbonsäuren bzw. deren Derivaten,
c) gegebenenfalls weiteren Bestandteilen und
d) gewünschtenfalls üblichen Additiven,
dadurch gekennzeichnet,
daß das weitgehend amorphe Polyalphaolefin ein Propen/Buten-1/Ethen-Terpolymer, ein Propen/Buten-1-Copolymer, ein Buten-1-Homopolymer oder ein Buten-1/Ethen-Copolymer ist.

Es war in hohem Maße überraschend, daß eine derartige Schmelzklebermasse alle genannten Anforderungen erfüllt, wobei es insbesondere überrascht, daß bereits durch Zusatz von weniger als 1 Gew.-% (bezogen auf die Mischung aus a) + b)) des erfindungsgemäß verwendeten Bestandteils b), welcher selbst nur einen Pfropfungsgrad deutlich unter 10 % besitzt, die Haftung der Schmelzklebermasse auf Polyolefinen wie z. B. Polypropylen und auf Metallen wie z. B. Aluminium ganz entscheidend und sprunghaft verbessert werden kann. Dies ist insbesondere deswegen von Interesse, weil dadurch im Gegensatz zum Harzzusatz die übrigen Eigenschaften des erfindungsgemäß verwendeten Bestandteils a) wie z. B. der Erweichungspunkt, die Viskosität, die offene Zeit und die mechanischen Eigenschaften kaum verändert werden.

Die erfindungsgemäße Schmelzklebermasse enthält 90 bis 99,9, vorzugsweise 93 bis 99,9, insbesondere aber 96 bis 99,9 Gewichtsteile eines gemäß dem Patentanspruch weitgehend amorphen Polyalphaolefins.

Derartige Produkte lassen sich an klassischen Ziegler-Katalysatoren bzw. deren Weiterentwicklungen gezielt polymerisieren. Ein solches Verfahren ist in DE-PS 23 06 667 beschrieben. Weitere besonders geeignete weitgehend amorphe Polyalphaolefine sind die unter dem Handelsnamen VESTOPLAST^{R} erhältlichen Propen/Buten-1-/Ethen-Terpolymeren, Propen/-Buten-1-Copolymeren und Buten-1-Homopolymeren, z. B. entsprechend DE-PS 23 06 667 oder DE-PS 29 30 108. Aber auch amorphe Polyalphaolefine, wie sie z. B. in EP-OS 0 226 112, EP-OS 0 143 978 und DE-OS 26 13 587 beschrieben sind, sowie die unter den Handelsnamen DURAFLEX^{R} bzw. TAFMER^{R} vermarkteten Buten-1-Homopolymeren, Buten-1-/-Ethen-Copolymeren bzw. Propen/Buten-1-/Ethen-Terpolymeren kommen gemäß dem Patentanspruch in Betracht.

Bei den anspruchsgemäßen funktionelle Gruppen tragenden Polymeren b) handelt es sich vorzugsweise um durch Pfropfung modifizierte überwiegend kristalline Polyolefine, die reine Homopolymerisate auf Basis von Propen oder aber Copolymerisate wie z. B. Propen-Ethen-Copolymere, Propen-Buten-(1)-Copolymere oder Buten-(1)-Ethen-Copolymere sein können. Ebenso kann ein Gemisch aus Polypropylen und den zuletzt genannten Copolymeren verwendet werden. Diese funktionelle Gruppen tragenden Polymeren besitzen einen ausreichend hohen Schmelzindex, um das Einmischen in die Komponente a) in einem herkömmlichen Schmelz- bzw. Mischbehälter zu erlauben.

Man setzt diesen Bestandteil b) erfindungsgemäß zu 0,1 bis 10, vorzugsweise 0,1 bis 7, insbesondere 0,1 bis 4 Gewichtsteilen ein.

Polymere, die eingesetzt werden können, sind z. B. mit Acrylsäure, Methacrylsäure oder Fumarsäure gepfropfte Polypropylene. Zu dieser Verbindungsklasse zählen z. B. die marktgängigen POLYBOND^{R}-Typen. Ebenfalls geeignet sind mit Maleinsäureanhydrid (MSA) gepfropfte Polypropylene. Entsprechende Polymere werden z. B. unter den Handelsnamen HERCOPRIME^{R} bzw. EXXELOR^{R} vertrieben. Als ungesättigte Säure eignen sich grundsätzlich auch Maleinsäure und Aconitsäure. Ebenfalls geeignet sind Derivate dieser ungesättigten Carbonsäure wie Anhydride, Ester, Amide, Imide und Metallsalze, wobei eine Derivatisierung (z. B. Amidierung, Veresterung, Bildung eines Metallsalzes) gegebenenfalls im Anschluß an die Pfropfungsreaktion durchgeführt werden kann.

Im allgemeinen erfolgt die Herstellung der beschriebenen Pfropfpolymere des Polypropylens durch übliche Pfropfpolymerisation der ungesättigten Säure bzw. Anhydride in Gegenwart des Pfropfsubstrates und eines Radikalbildners. Als letztere können Peroxide, Azo-Verbindungen oder energiereiche Strahlung verwendet werden. Typische Synthesebeispiele sind in EP-OS 0 188 926, BE-PS 692 301, JP-PS 27 421/66 oder US-PS 3 499 819 angeführt. Zum Erzielen eines ausreichenden Effektes sollte der Pfropfungsgrad > 0,05 % sein, vorzugsweise liegt er bei 0,1 bis 10 %, insbesondere zwischen 0,2 und 8 %. Für die Praxis akzeptable Verarbeitungsviskositäten erhält man, wenn der Schmelzindex (MFI 190/5) des Pfropfpolymers > 30 g/10 min, bevorzugt > 40 g/10 min, insbesondere > 60 g/10 min beträgt.

Die Herstellung der erfindungsgemäßen Massen gelingt durch Mischen bei erhöhter Temperatur, zweckmäßig unter einem Schutzgas wie Stickstoff. Geeignete Vorrichtungen hierfür sind mit einer Rührvorrichtung versehene Aufschmelzbehälter oder beheizte Kneter. Bei Temperaturen von etwa 150 bis 200, bevorzugt 170 bis 180 °C ist die Mischung im allgemeinen bei bis zu 30 Minuten vollzogen.

Obwohl die erfindungsgemäße Schmelzkleber- und Beschichtungsmasse grundsätzlich harz- und wachsfrei ist, kann in manchen Fällen der Zusatz eines weiteren Bestandteils c) vorteilhaft sein.

Als Bestandteil c) geeignet sind kleine Harz- bzw. Wachsmengen, z. B. zur Verbesserung der Benetzung bzw. zur Viskositätsregulierung oder zur Steuerung der offenen Zeit. Geeignet und ausreichend sind 1 bis 30, insbesondere 1 bis 20 Gewichtsteile, bezogen auf 100 Teile a) plus b). Bei den Wachsen ist hierbei der Einsatz mikrokristalliner Wachse sowie synthetischer Wachse nach dem Fischer-Tropsch-Prozeß oder nach dem Ziegler-Verfahren möglich, während bei den Harzen in erster Linie modifizierte Kohlenwasserstoffterpenharze, Polyterpenharze, aliphatische Kohlenwasserstoffharze, cyclische Kohlenwasserstoffharze und hydrierte Kolophoniumester in Betracht kommen.

Auch der Einsatz von Ölen, Polyisobutylen und bestimmten Kautschuken ist als Bestandteil c) grundsätzlich möglich, z. B. wenn die Viskosität der Komponente a) verändert (z. B. erhöht) werden soll oder wenn in Einzelfällen eine Verbesserung der Kältebeständigkeit gewünscht wird. Manchmal läßt sich durch Zusatz eines Kautschukes auch die Adhäsion günstig beeinflussen. Bevorzugte Kautschuktypen sind SEBS und SIS, wobei gegebenenfalls die Zusatzmenge zwischen 0 und 30 Gewichtsteilen, vorzugsweise zwischen 0 und 20, insbesondere aber zwischen 0 und 10 Gewichtsteilen liegen kann, immer bezogen auf 100 Teile a) plus b). Bei schlechter einmischbaren Kautschuktypen wie z. B. SBS oder Ethylen-Propylen-Kautschuken (statistische und Sequenztypen) ist der Einsatz eines sogenannten "Verträglichkeitsvermittlers", z. B. Harz oder Öl, vorteilhaft.

Ebenso läßt sich mittels eines Bestandteils c) in Form eines gut fließfähigen isotaktischen Polypropylens (Homo- oder Copolymerisat) im Bedarfsfall der Erweichungspunkt der erfindungsgemäßen Schmelzkleber- bzw. Beschichtungsmasse nach oben korrigieren. Die Zusatzmenge sollte jedoch 5 Gewichtsteile nicht überschreiten, bezogen auf 100 Teile a) + b).

Schließlich ist es auch möglich, die erfindungsgemäße Masse durch geeignete Wahl des weiteren Bestandteils c) zu derivatisieren. Hierdurch kann man den Viskositätsverlauf in Abhängigkeit von der Temperatur und das Benetzungsverhalten auf dem Substrat beeinflussen. In manchen Fällen kann auch auf diese Weise die Haftung auf bestimmten Substraten gesteuert bzw. weiter verbessert werden. Geeignete Derivatisierungsmittel sind z. B. von Natrium, Kalium, Calcium und Zink abgeleitete Metallhydroxide, Metalloxide und Metallcarbonate sowie ein- und mehrwertige Alkohole und Amine mit Siedepunkten über 120 °C, bevorzugt über 150 °C, insbesondere aber über 180 °C. Man führt die Derivatisierung durch, indem man die Komponenten a) und b) in einem Kneter oder in einem mit einer Rührvorrichtung versehenen Aufschmelzbehälter unter Stickstoffatmosphäre bei erhöhter Temperatur zweckmäßig bei etwa 180 °C 30 Minuten lang mischt. Die Zugabe des Derivatisierungsmittels erfolgt (abhängig von dessen Siedepunkt und von der Schmelztemperatur der Mischung) bei einer Temperatur zwischen 120 und 180 °C. Nach weiteren 60 Minuten Mischzeit unter Stickstoffatmosphäre bei einer Massetemperatur zwischen 120 und 180 °C (abhängig von der Flüchtigkeit des Derivatisierungsmittels und von der Schmelztemperatur der Mischung) ist die Reaktion beendet.

Selbstverständlich kann die erfindungsgemäße Schmelzkleber- bzw. Beschichtungsmasse mit den im Kunststoffbereich üblichen Additiven ausgerüstet werden, z. B. Wärme- und Lichtstabilisatoren, optische Aufheller, Antistatika, Gleit- und Antiblockmittel, Nukleierungsmittel, Füll- und Farbstoffe, Pigmente sowie flammhemmende Mittel.

### Beispiele

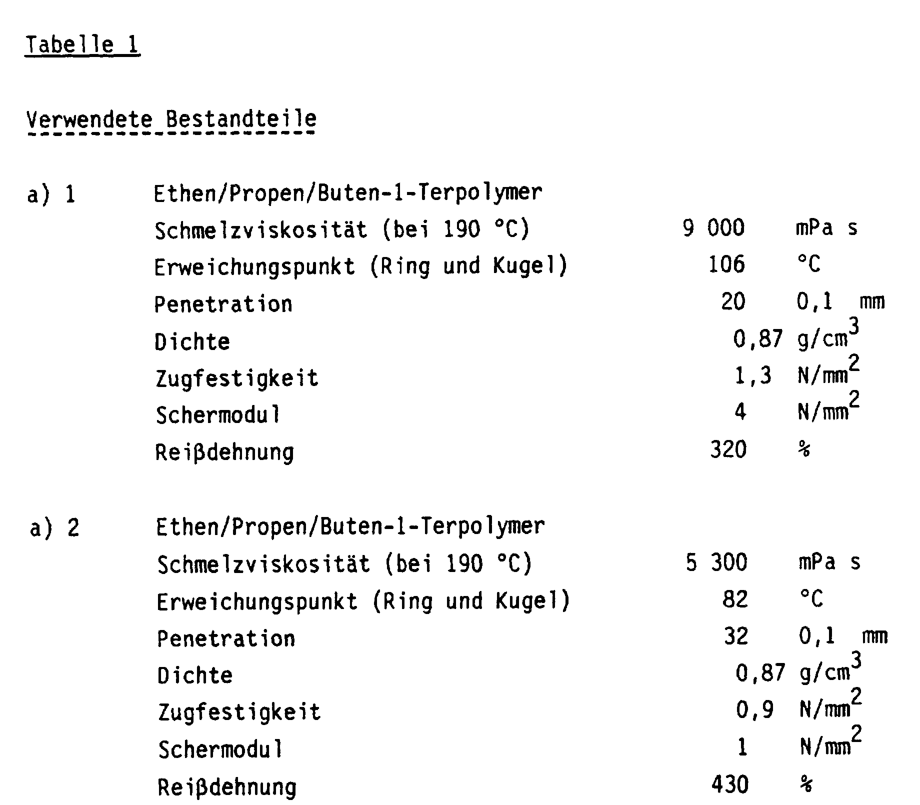

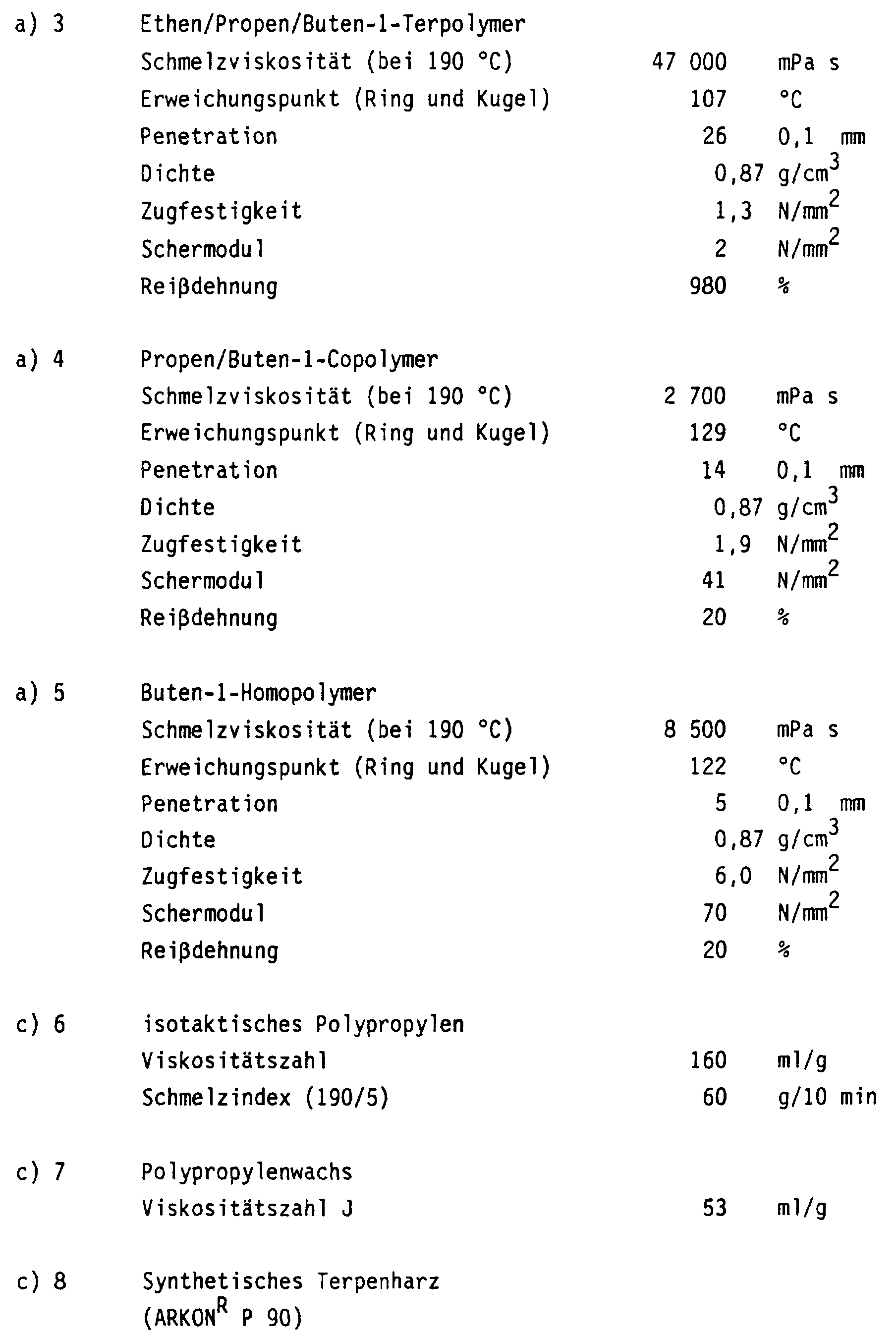

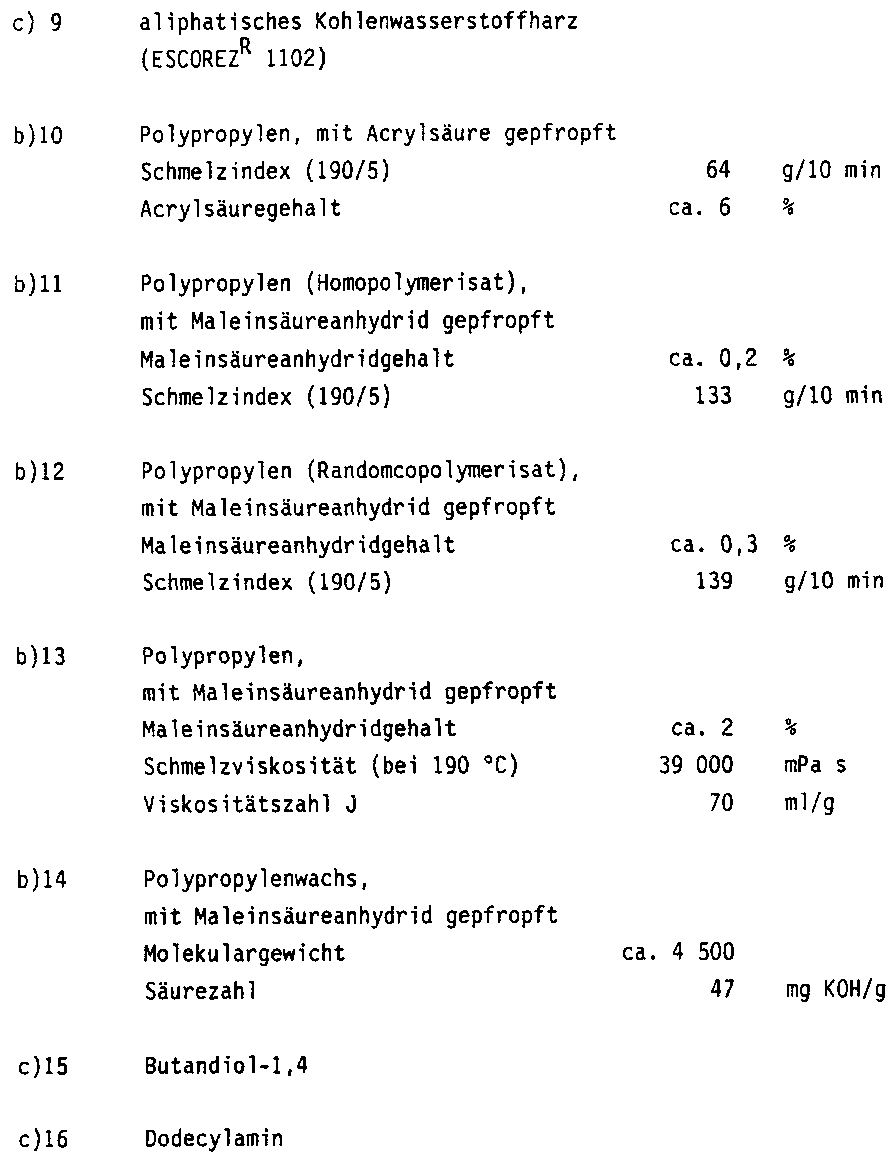

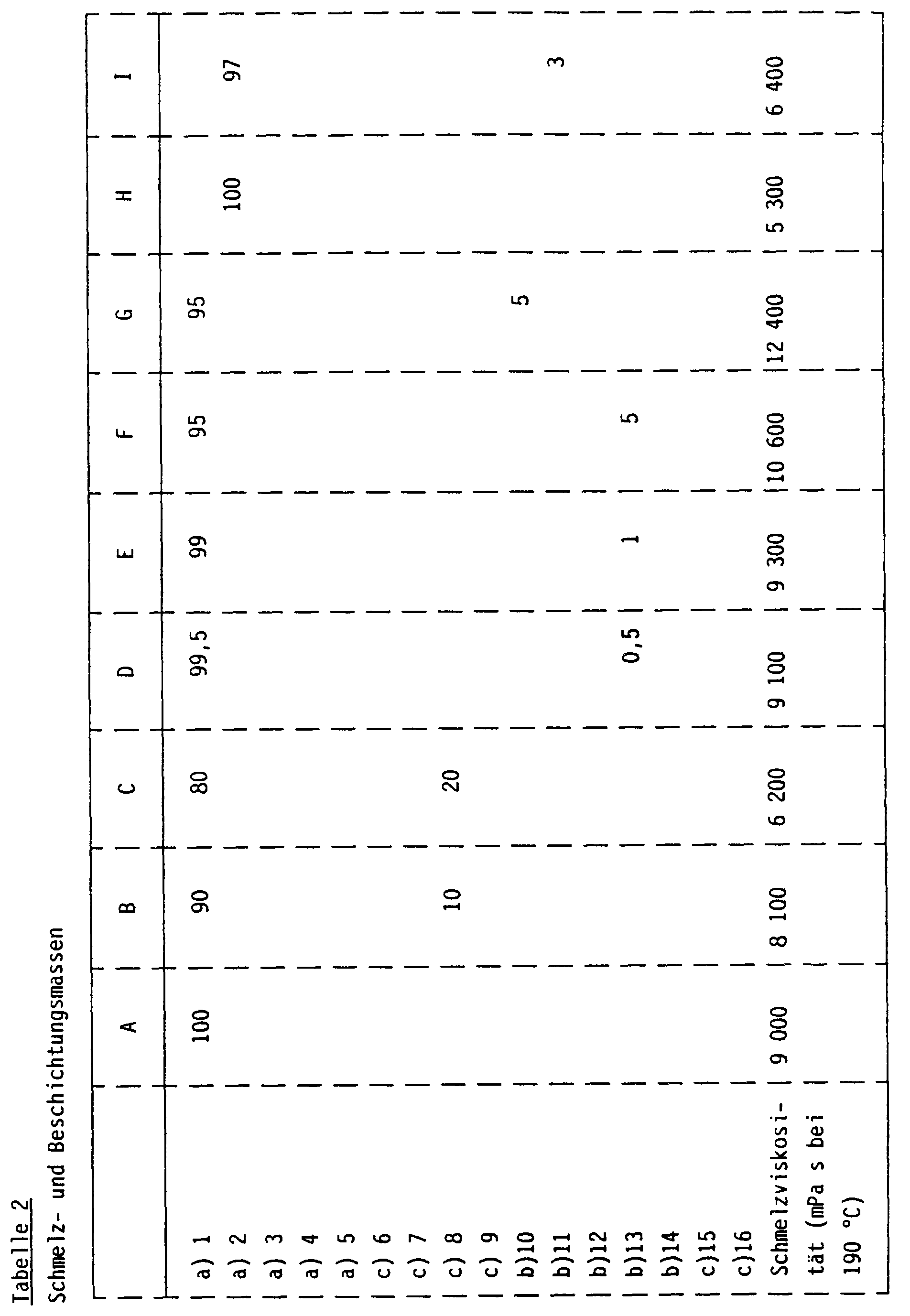

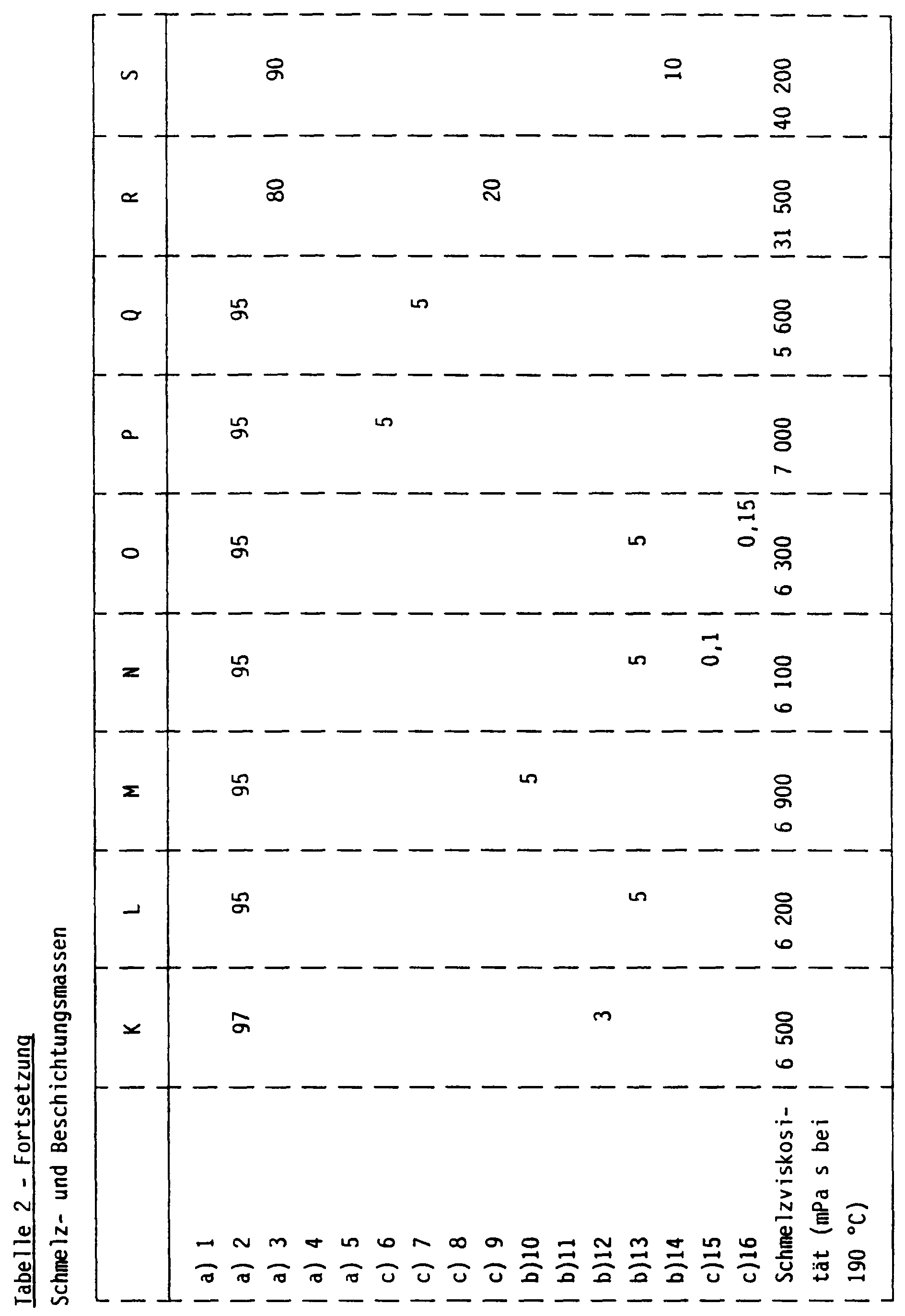

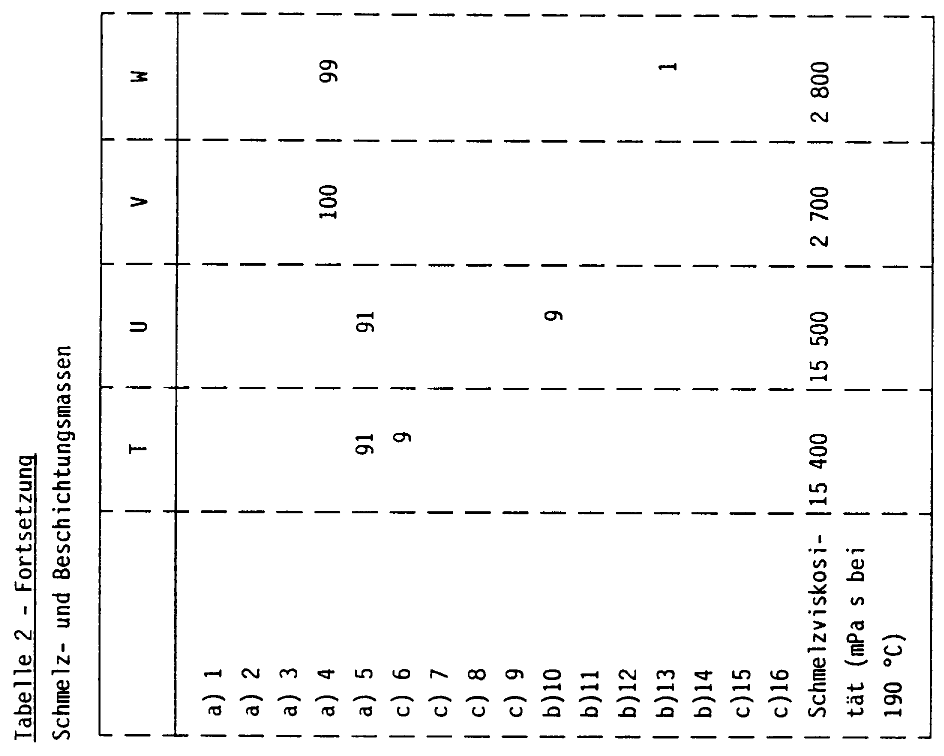

### 1. Herstellung der Schmelzkleber- und Beschichtungsmasse

Alle Mischungen gemäß Tabelle 2 werden in einem ölbeheizten Meili-Laborkneter unter Stickstoffatmosphäre hergestellt. Die Mischzeit beträgt - sofern keine Derivatisierung durchgeführt wird - generell 30 min, die Massetemperatur 180 °C.

Die Derivatisierung (Mischungen N und O) wird in der Weise durchgeführt, daß man das amorphe Polyalphaolefin a) 2 mit dem funktionalisierten Polypropylen b) 13 zunächst unter den o. g. Bedingungen vormischt. Danach erfolgt die Zugabe des Derivatisierungsmittels c)15 bzw. c)16. Nach weiteren 60 min Mischzeit unter Stickstoffatmosphäre und bei einer Massetemperatur von 180 °C ist die Reaktion beendet.

### 2. Herstellung der Prüfkörper (Laminate) und Durchführung der Prüfung

Die schmelzflüssigen Massen aus Tabelle 2 werden mittels eines Erichsen-Ziehgerätes auf Natronkraftpapier aufgerakelt, wobei man insbesondere darauf achtet, daß ein weitgehend einheitliches Beschichtungsgewicht (20 bis 25 g/m) erhalten wird. Diese Prüfkörper werden in einer Bügelpresse eine definierte Zeit lang bei definierten Temperaturen gegen verschiedene Substrate gepreßt (Tabelle 3).

**Tabelle 3**

| Substrate | Temperatur des beschichteten Natronkraftpapiers | Temperatur des Substrats | Preßzeit |
|---|---|---|---|
| Natronkraftpapier | 160 °C | 180 °C | 3 sec |
| Polypropylen (Preßplatte) | 160 °C | 180 °C | 5 sec |
| Aluminiumfolie, 50 µm | 170 °C | 180 °C | 5 sec |

Man prüft die Stärke des Klebverbundes an Prüfkörpern des Formats 100 mm x 25 mm, wobei man die jeweiligen Prüfkörper in Längsrichtung leicht anschält und den angeschälten Teil mit einem Gewicht von 100 g belastet ("Peel-Test"). Bestimmt wird die für das Abschälen erforderliche Zeit in Minuten. Falls innerhalb einer bestimmten Zeit kein vollständiges Abschälen auftritt, bricht man den Versuch ab; die in diesem Fall erhaltenen Ergebnisse sind an > 600 min zu erkennen (Tabelle 4).

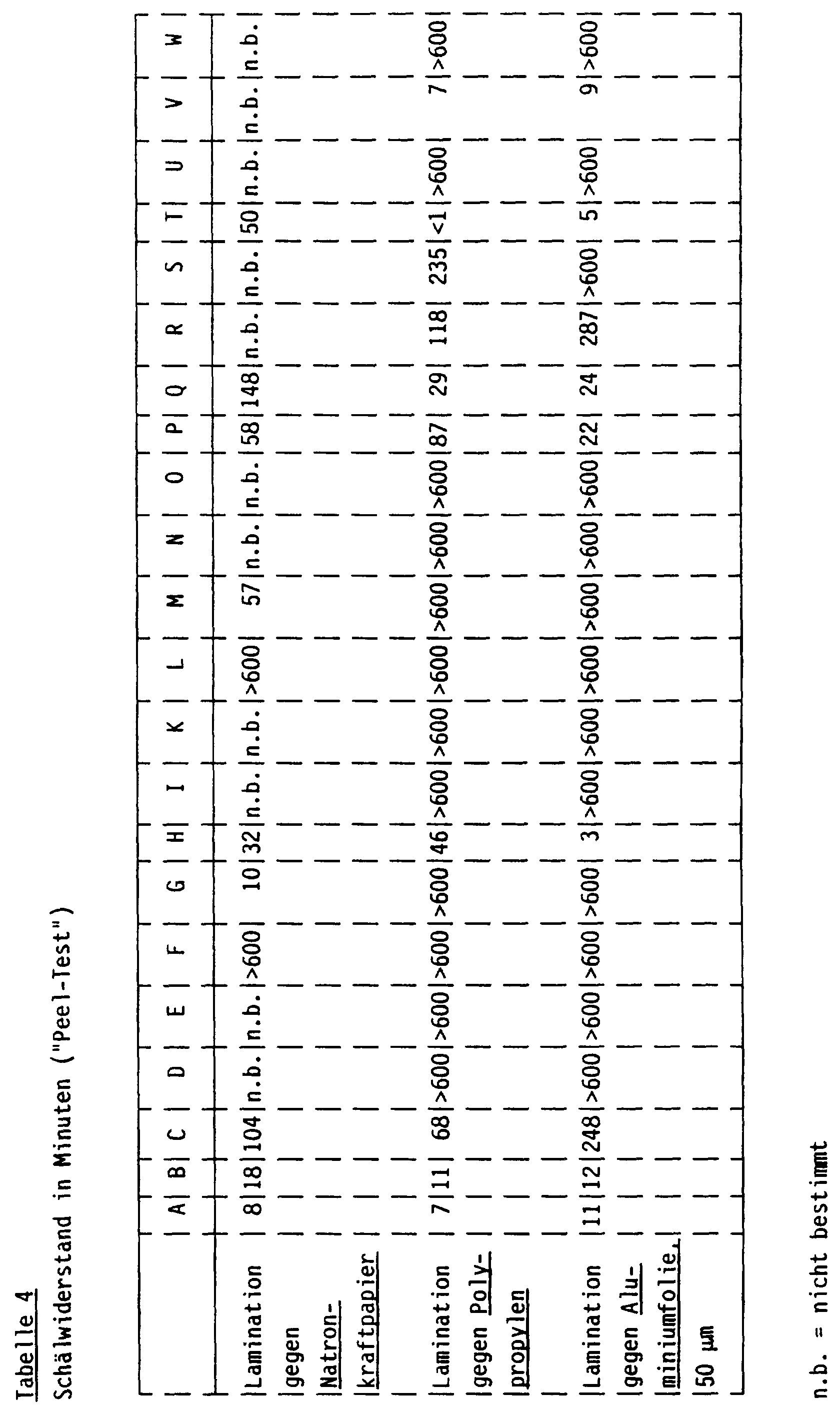

### Auswertung:

Den Stand der Technik geben die Massen A, B, C, H, P, Q, R, T und V wieder, welche nur aus dem Bestandteil a) oder aus dessen nicht beanspruchter Kombination mit einem Polyolefin oder einem Kohlenwasserstoffwachs oder -harz bei Fehlen des Bestandteils b) bestehen. Diese Massen erreichen auf Polypropylen und Aluminiumfolie einen Schälwiderstand von maximal 118 bis 287 Minuten.

Erfindungsgemäß sind die Massen D, E, F, G, I, K, L, M, N, O, S, U und W, welche aus den Bestandteilen a) und b) zusammengesetzt sind. Diese ergeben eine derart starke Verklebung, daß die Schälwerte weit über 600 Minuten liegen und man den Peel-Test abbrechen muß. Deutlich ist, z. B. im Vergleich der Massen D und E mit Masse A, der sprunghafte Anstieg der Schälwerte bereits durch ganz geringe Anteile des Bestandteils b); daher sind solche Massen allgemein zu bevorzugen. Aus den Massen N und O ist erkennbar, daß die Mitverwendung geringer Mengen weiterer Zusätze c), die zur Erzielung zusätzlicher Effekte gewünscht sein kann, die Verklebung offenbar nicht beeinträchtigt.

## Patentansprüche

1. Leicht aufschmelz- und verarbeitbare Schmelzkleber- und Beschichtungsmasse mit einer Schmelzviskosität (gemessen bei 190 °C) zwischen 1 000 und 60 000 mPa s bestehend aus
a) 90 bis 99,9 Gewichtsteilen eines weitgehend amorphen Polyalphaolefins mit einem Erweichungspunkt von 70 bis 140 °C, einer Dichte < 0,90 g/cm³ sowie Zugfestigkeit zwischen 0,5 und 10 N/mm,
b) 0,1 bis 10 Gewichtsteile eines funktionelle Gruppen tragenden Polymeren auf Basis von Olefinen und ungesättigten Carbonsäuren bzw. deren Derivaten,
c) gegebenenfalls weiteren Bestandteilen und
d) gewünschtenfalls üblichen Additiven,
dadurch gekennzeichnet,
daß das weitgehend amorphe Polyalphaolefin ein Propen/Buten-1/Ethen-Terpolymer, ein Propen/Buten-1-Copolymer, ein Buten-1-Homopolymer oder ein Buten-1/Ethen-Copolymer ist.

2. Masse gemäß Patentanspruch 1,
gekennzeichnet durch
einen Bestandteil a) mit einer Nadelpenetration von 4 bis 15 mm ^{·} 10⁻¹, einer Schmelzviskosität (bei 190 °C) zwischen 1 000 und 20 000 mPa s, einem Schermodul (bei 23 °C) zwischen 30 und 80 N/mm und einer Reißdehnung zwischen 10 und 50 %.

3. Masse gemäß Patentanspruch 1,
gekennzeichnet durch
einen Bestandteil a) mit einer Nadelpenetration von 10 bis 80 mm ^{·} 10⁻¹, einer Schmelzviskosität (bei 190 °C) zwischen 1 000 und 60 000 mPa s, einem Schermodul (bei 23 °C) < 30 N/mm und einer Reißdehnung zwischen 50 und 1 500 %.

4. Masse gemäß Patentanspruch 1,
dadurch gekennzeichnet,
daß der Bestandteil b) einen Schmelzindex (MFI 190/5) > 30 g/10 min besitzt und durch Pfropfung (Pfropfungsgrad 0,2 bis 10 %) aus einem überwiegend kristallinen Polyolefin-Homopolymerisat oder -Copolymerisat erhalten wird, wobei man als Pfropfmonomere Maleinsäure, Fumarsäure, Aconitsäure, Acrylsäure, Methacrylsäure bzw. Derivate dieser Säuren verwendet.

5. Masse gemäß Patentanspruch 1,
dadurch gekennzeichnet,
daß der Bestandteil c) ein Wachs, Harz, Öl, Kautschuk oder ein Derivatisierungsmittel ist.

6. Verwendung der Masse gemäß Patentansprüchen 1 bis 5
für das Verkleben bzw. Beschichten von Polyolefinen, Metallen und hydroxylgruppen-, epoxygruppen- oder aminogruppenhaltigen Substraten wie Papier, Holz und Duroplasten.

## Claims

1. A readily meltable and processable hot-melt adhesive and coating composition having a melt viscosity (measured at 190°C) of from 1,000 to 60,000 mPa s, comprising
a) from 90 to 99.9 parts by weight of a largely amorphous polyalphaolefin having a softening point of from 70 to 140°C, a density of < 0.90 g/cm³ and a tensile strength of from 0.5 to 10 N/mm,
b) from 0.1 to 10 parts by weight of a polymer which carries functional groups and is based on olefins and unsaturated carboxylic acids or derivatives thereof,
c) further constituents if desired, and
d) customary additives if desired,
characterized in that the largely amorphous polyalphaolefin is a propene-1-butene-ethene terpolymer, a propene-1-butene copolymer, a 1-butene homopolymer or a 1-butene-ethene copolymer.

2. A composition according to claim 1, characterized by a constituent a) having a needle penetration of from 4 to 15 mm 10⁻¹, a melt viscosity (at 190°C) of from 1,000 to 20,000 mPa s, a shear modulus (at 23°C) of from 30 to 80 N/mm and an elongation at break of from 10 to 50%.

3. A composition according to claim 1, characterized by a constituent a) having a needle penetration of from 10 to 80 mm·10⁻¹, a melt viscosity (at 190°C) of from 1,000 to 60,000 mPa s, a shear modulus (at 23°C) of < 30 N/mm and an elongation at break of from 50 to 1,500%.

4. A composition according to claim 1, characterized in that the constituent b) has a melt index (MFI 190/5) of > 30 g/10 min and is obtained by grafting (degree of grafting from 0.2 to 10%) from a predominantly crystalline polyolefin homopolymer or copolymer, using maleic acid, fumaric acid, aconitic acid, acrylic acid, methacrylic acid or a derivative of these acids as graft monomer.

5. A composition according to claim 1, characterized in that the constituent c) is a wax, resin, oil or rubber or a derivatizing agent.

6. The use of a composition according to any of claims 1 to 5 for the adhesive bonding or coating of polyolefins, metals and substrates containing hydroxyl, epoxy or amino groups, such as paper, wood and thermosetting resins.

## Revendications

1. Composition d'adhésif fusible et de revêtement, facilement fusible et apte à la mise en oeuvre, ayant une viscosité à l'état fondu (mesurée à 190°C) comprise entre 1000 et 60 000 mPa.s, constituée
a) de 90 à 99,9 parties en poids d'une poly-α-oléfine essentiellement amorphe ayant un point de ramollissement de 70 à 140°C, une masse volumique < 0,90 g/cm³ et une résistance à la traction comprise entre 0,5 et 10 N/mm,
b) de 0,1 à 10 parties en poids d'un polymère portant des groupes fonctionnels, à base d'oléfines et d'acides carboxyliques insaturés ou de leurs dérivés,
c) éventuellement, d'autres constituants, et
d) si on le souhaite, d'additifs usuels,
caractérisée par le fait que la poly-α-oléfine essentiellement amorphe est un terpolymère propène/butène-1/éthène, un copolymère propène/butène-1, un homopolymère de butène-1 ou un copolymère butène-1/éthène.

2. Composition selon la revendication 1, caractérisée par le fait que le constituant a) a une pénétration à l'aiguille de 4 à 15 mm.10⁻¹, une viscosité à l'état fondu (à 190°C) comprise entre 1000 et 20 000 mPa.s, un module d'élasticité (à 23°C) compris entre 30 et 80 N/mm, et un allongement à la rupture compris entre 10 et 50 %.

3. Composition selon la revendication 1, caractérisée par le fait que le constituant a) a une pénétration à l'aiguille de 10 à 80 mm.10⁻¹, une viscosité à l'état fondu (à 190°C) comprise entre 1000 et 60 000 mPa.s, un module d'élasticité (à 23°C) < 30 N/mm, et un allongement à la rupture compris entre 50 et 1500 %.

4. Composition selon la revendication 1, caractérisée par le fait que le constituant b) possède un indice de fluidité (MFI 190/5) > 30 g/10 min et est obtenu par greffage (degré de greffage 0,2 à 10 %) à partir d'un homopolymère ou d'un copolymère polyoléfinique essentiellement cristallin, auquel cas on utilise comme monomère de greffage l'acide maléique, l'acide fumarique, l'acide aconitique, l'acide acrylique, l'acide méthacrylique, ou des dérivés de ces acides.

5. Composition selon la revendication 1, caractérisée par le fait que le constituant c) est une cire, une résine, une huile, un caoutchouc ou un modifiant.

6. Utilisation de la composition selon les revendications 1 à 5 pour coller ou revêtir des polyoléfines, des métaux et des substrats hydroxylés, époxydés ou aminés tels que le papier, le bois ou les thermodurcissables.
